# EUROPÄISCHE PATENTSCHRIFT

(11) **EP 2 191 152 B1**
(45) Veröffentlichungstag und Bekanntmachung des Hinweises auf die Patenterteilung: **06.11.2013**
(21) Anmeldenummer: 08785598.7
(22) Anmeldetag: 18.08.2008
(51) Int. Cl.: F16B 19/10

(54) **VERWENDUNG EINES BLINDNIETS UND VERFAHREN ZUM SETZEN EINES BLINDNIETS**
USE OF A BLIND RIVET AND POSITIONING METHOD OF A BLIND RIVET
UTILISATION D'UN RIVET AVEUGLE ET PROCÉDÉ DE PLACEMENT D'UN RIVET AVEUGLE

(30) Priorität: 20.08.2007 DE 102007040371
(43) Veröffentlichungstag der Anmeldung: 02.06.2010
(73) Patentinhaber: Würth International AG, 7004 Chur (CH); Adolf Würth GmbH & Co. KG, 74653 Künzelsau (DE)
(72) Erfinder: FRANK, Uwe, 74629 Windischenbach (DE)
(74) Vertreter: Patentanwälte Ruff, Wilhelm, Beier, Dauster & Partner
(86) Internationale Anmeldenummer: PCT/EP2008/006766
(87) Internationale Veröffentlichungsnummer: WO 2009/024311

(56) Entgegenhaltungen:
- WO-A-2007/090681
- DE-A1- 10 130 681
- DE-A1-102004 006 344
- US-A- 3 403 593

## Beschreibung

Die Erfindung betrifft die Verwendung eines Blindniets mit einem als Zugelement wirkenden Nietdorn sowie ein Verfahren zum Setzen eines Blindniets.

Blindniete sind bekannt. Sie dienen dazu, etwas an einem Element zu befestigen, ohne an dessen Rückseite, der Blindseite, hantieren zu müssen oder zu können. Es kann sich um die Verbindung zweier Teile handeln oder die Festlegung eines Elements, an dem dann etwas anderes befestigt wird.

Blindniete dieser Art können sowohl so verwendet werden, dass vorher mit einem Bohrer ein Loch gebohrt wird, in das der Blindniet dann eingesetzt wird. Es gibt ebenfalls Blindniete mit einer Bohrspitze, so dass in einem Arbeitsgang zunächst das Loch gebohrt und anschließend der Blindniet in dieses Loch eingesetzt wird. Ebenfalls bekannt sind Vorgänge, wo ein Blindniet ruckartig ohne Vorbohren in das Blech eingeschossen wird. Die Aufweitung kann durch einen Schlag in Setzvorrichtung oder durch ein Ziehen entgegengesetzt zur Setzvorrichtung erfolgen. Hierzu haben die Blindniete üblicherweise einen Dorn, der Teil des konfektionierten Blindniets ist, an dem nach dem Setzen gezogen wird, und bei dem der überschüssige Teil des Nietdorns weggeworfen wird.

Es ist bereits ein Blindniet bekannt, der zur Verbindung zweier gelochter Bleche dient. Zu seinem Aufweiten ist ein Stößel vorgesehen, der kein Teil des Blindniets ist und zur Aufweitung des in dem Loch eingesetzten Blindniets schlagartig vorwärts bewegt wird (WO2007/090681 A2).

Der Erfindung liegt die Aufgabe zu Grunde, einen Blindniet im Hinblick auf seine Handhabung weiter zu verbessern.

Zur Lösung dieser Aufgabe schlägt die Erfindung die Verwendung eines Blindniets mit den Merkmalen des Anspruchs 1 und ein Verfahren zum Setzen eines Blindniets gemäß Anspruch 11 vor. Weiterbildungen der Erfindung sind Gegenstand der jeweiligen abhängigen Patentansprüche.

Die Erfindung verwendet einen Blindniet welcher eine Angriffsstelle auf weist, an der ein Zugelement angreifen kann, um in einer an sich bekannten Weise das vordere Setzende des Nietkörpers nach außen zu verformen, um dadurch den Blindniet festzulegen. Dieses Zugelement ist nicht Teil des Blindniets, sondern ein getrenntes Teil, das während des Setzvorgangs, beispielsweise unmittelbar vor dem Aufweiten, mit dem Nietkörper verbunden wird.

Eine andere Möglichkeit zur Gestaltung der Angriffsstelle für das Zugelement besteht darin, dass der Nietkörper eine quer zur Längsachse des Nietkörpers verlaufende Kontaktfläche aufweist. Es kann sich dabei um eine definierte Kontaktfläche handeln, oder auch einfach um den Boden eines Sacklochs. Hier kann ein Zugelement auf die unterschiedlichsten Arten verbunden werden, beispielsweise durch eine Verschweißung, bei entsprechend kräftigen Klebern auch durch eine Verklebung.

Insbesondere kann vorgesehen sein, dass die Angriffsstelle für das Zugelement in einer Vertiefung des Nietkörpers angeordnet ist, beispielsweise dann, wenn der Nietkörper als Hülse ausgebildet ist.

Das vordere Setzende des Blindniets kann ein einstückiger Teil des Nietkörpers sein, so dass der Nietkörper insgesamt nur aus einem Teil besteht.

Es kann sich aber auch um ein getrenntes Teil handeln, das mit dem Nietkörper dann verbunden ist.

Es hat sich herausgestellt, dass es möglich ist, einen Blindniet mit einer ebenen Stirnfläche an seinem vorderen Ende in ein Blech oder dergleichen einzuschießen, wobei das vordere Ende dann insbesondere einen insbesondere scharfkantigen Rand aufweist.

Falls das Zugelement mit dem Blindniet durch eine Widerstandsverschweißung oder eine sonstige elektrisch betätigte Verschweißung verbunden wird, kann erfindungsgemäß der Nietkörper eine Isolierung, insbesondere eine Isolierschicht oder eine Isolierhülse aufweisen, die dafür sorgt, dass das Zugelement nur mit seinem vorderen Stirnende mit der entsprechenden Gegenfläche in Berührung gerät.

Eine solche vorzugsweise aus Kunststoff bestehende Isolierhülse kann so ausgestaltet sein, dass sie mit einer Isolierhülse für einen oder mehrere benachbarte Blindniete verbunden ist, so dass solche Isolierhülsen einen Streifen bilden, der zu einer Magazinierung mehrerer Blindniete dienen kann. Eine solche Magazinierung kann auch dann sinnvoll sein, wenn die Verbindung zwischen dem Zugelement und den Blindniet keine Verschweißung ist. Auch in diesem Fall kann dadurch ein Streifen von zusammenhängenden Blindnieten gebildet werden, was die Handhabung in einem Werkzeug vereinfachen kann.

Falls die Verbindung zwischen dem Nietdorn und dem Blindniet eine Verschweißung ist, kann zum Lösen der Verbindung nach der Herstellung der Vernietung der Nietdorn verdreht werden, um ihn abzuscheren.

Zum Abtrennen kann auch eine verstärkte Rückzugsbewegung dienen, wenn nämlich nach dem Setzen des Blindniets weiter an dem Nietdorn gezogen wird.

Bei dem als Zugelement dienenden Nietdorn kann es sich um einen Teil eines Setzwerkzeugs handeln, das sich zwar abnutzen oder verschleißen kann, das aber im Prinzip in dem Nietsetzwerkzeug bleibt.

Es kann sich aber auch bei dem Nietdorn um ein Verbrauchselement handeln, das vom Benutzer einfach ausgewechselt werden können soll. In diesem Fall kann vorgesehen sein, dass der Nietdorn in einfacher Weise lösbar mit einem Setzwerkzeug verbindbar ist. Beispielsweise kann das Nietsetzwerkzeug eine Art Futter aufweisen, ähnlich wie ein Bohrfutter, um den Nietdorn auszuwechseln.

Insbesondere kann vorgesehen sein, dass der Nietdorn nachstellbar in dem Setzwerkzeug angeordnet ist.

Das Nietsetzwerkzeug kann insbesondere ein Magazin zur Aufnahme von mehreren Blindnieten oder eine Einrichtung zur Aufnahme eines Magazins von Blindnieten aufweisen.

Falls der Nietdorn elektrisch verschweißt werden soll, kann er Vorteilhaft mindestens in seinem zum Eingreifen in den Nietkörper des Blindniets bestimmten Bereich eine Isolierung aufweisen.

Vorteilhaft kann vorgesehen sein, dass der Nietdorn durch Sollbruchstellen getrennte einzelne Abschnitte aufweist. Dies kann dazu dienen, den Nietdorn nach seiner Verbindung mit dem Blindniet und nach dem Setzvorgang an einer Stelle abzutrennen, die von der Verbindungsstelle zwischen Nietdorn und Blindniet einen gewissen Abstand aufweist. Dies kann beispielsweise dazu dienen, dass nach dem Setzen des Blindniets und Entfernen des Nietdorns ein Teil des Nietdorns in der Öffnung des Blindniets bleibt, was zu einer Verstärkung der durch den Blindniet bewirkten Verbindung dienen kann.

Diese Möglichkeit der Aufteilung des Nietdorns durch Sollbruchstellen in einzelne getrennte Abschnitte kann sowohl dann sinnvoll sein, wenn der Nietdorn mit dem Blindniet verschweißt wird, also außen glatt ist, als auch dann, wenn er mit dem Blindniet verschraubt wird.

Da, wie bereits erwähnt, der Nietdorn auch als Verbrauchsmaterial dienen kann, wenn er nämlich einzelne durch Sollbruchstellen getrennte Abschnitte aufweist, schlägt die Erfindung ebenfalls einen Nietdorn als Zugelement zum Setzen eines Blindniets vor. Dieser Nietdorn kann beispielsweise, wenn er zum Verschweißen bestimmt ist, mindestens in seinem zum Eingreifen in einen Nietkörper eines Blindniets bestimmten Bereich eine Isolierung aufweisen.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen schematischen Schnitt durch einen Blindniet mit einem Nietdorn;
- Figur 2: eine der Figur 1 entsprechende Darstellung bei einer der Erfindung entsprechenden geänderten Ausführungsform;
- Figur 3: einen Schnitt durch eine der Erfindung entsprechenden nochmals geänderten Ausführungsform;
- Figur 4: einen Schnitt durch einen zweiteiligen Blindniet;
- Figur 5: einen Schnitt durch einen zweiteiligen Blindniet mit eingesetztem Nietdorn;
- Figur 6: einen der Figur 5 entsprechenden Schnitt mit einem zu verschweißenden Nietdorn;
- Figur 7: eine der Figur 6 entsprechende Darstellung;
- Figur 8: einen Blindniet mit einem zu verschraubenden Nietdorn;
- Figur 9: vereinfacht die Seitenansicht eines zu verschweißenden einzelne Abschnitte aufweisenden Nietdorns;
- Figur 10: eine der Figur 9 entsprechende Darstellung eines mit einem Blindniet zu verschraubenden Nietdorns;
- Figur 11: die Seitenansicht eines zu verschweißenden Nietdorns;
- Figur 12 - 15: vereinfachte Schnitte durch je einen Blindniet nach weiteren Ausführungsformen der Erfindung.

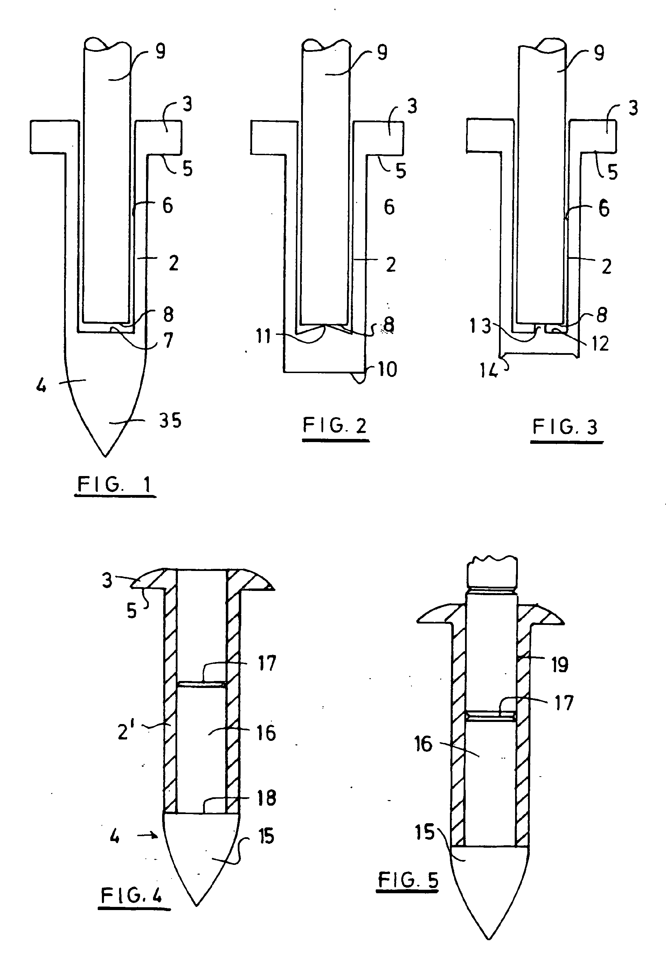

Die Figuren 1, 4, 5, und 8 fallen nicht unter den Wortlaut der Erfindung, dienen jedoch dem besseren Verständnis der Beschreibung.

Figur 1 zeigt zur Erläuterung der Erfindung ein stark vereinfachtes Beispiel für einen Blindniet. Der Blindniet 1 weist einen Nietkörper 2 mit einem an seinem einen Ende radial nach außen vorspringenden Flansch 3 und ein an dem anderen Ende des Nietkörpers 2 angeordnetes vorderes Setzende 4 auf. Das Setzende 4 enthält eine ballistische Spitze 35. An der der ballistischen Spitze 35 beziehungsweise dem vorderen Setzende 4 zugewandten Seite enthält der Flansch 3 eine Anlagefläche 5, die in einer Ebene liegt, die quer zur Längsachse des Nietkörpers 2 verläuft. Der Nietkörper 2 weist ein Sackloch 6 auf, das von einem Boden 7 begrenzt ist. Der Boden 7 bildet eine Angriffsstelle für das vordere Stirnende 8 eines Nietdorns 9. Der Nietdorn 9 ist zylindrisch ausgebildet und weist einen Außendurchmesser auf, der kleiner ist als der Innendurchmesser des Sacklochs 6 des Nietkörpers 2. Dadurch passt er mit radialem Abstand in das Sackloch 6 hinein. Er kann, wenn seine Stirnfläche 8 den Boden 7 des Sacklochs 6 berührt, durch Verbinden mit einer Stromquelle mit dem Boden 7 verschweißt werden. Wird dann an dem Nietdorn 9 bei Festhalten des Flanschs 3 gezogen, so verformt sich der vordere Teil des Nietkörpers 2, um dadurch einen Nietkopf zu bilden, der zu einer Festlegung des Blindniets in einer Öffnung eines Blechs führt.

Die verschiedenen Figuren zeigen unterschiedliche Arten der Formen von Setzenden 4, die aber alle miteinander kombiniert werden können, insofern diese Kombinotionen unter dem Wortlaut der Ansprüche fallen. Figur 2 zeigt, eine Ausführungsform, bei der das Setzende 4 des Blindniets erfindungsgemäß keine ballistische Spitze aufweist, sondern eine ebene Stirnfläche 10. Dieser Blindniet kann beispielsweise in eine vorher gebohrte Öffnung eingesetzt werden. Er kann aber auch eingeschossen oder eingetrieben werden, ohne dass vorher ein Loch vorhanden ist.

Ein zweiter Unterschied bei der Ausführungsform der Figur 2 besteht darin, dass der Boden des Sacklochs 6 eine Kegelform mit einer nach innen gerichteten Spitze 11 aufweist. Dadurch wird eine definierte Berührungsfläche zwischen der Spitze 11 und dem Stirnende 8 des Nietdorns 9 geschaffen. Dies begünstigt den Lichtbogen, der beim Schweißen entsteht.

Figur 3 zeigt eine weitere Ausführungsform, bei der auf dem Boden 12 des Sacklochs 6 des Nietkörpers 2 ein zylinderförmiger Vorsprung 13 ausgebildet ist, der zu einer definierten Berührungsfläche zwischen dem Stirnende 8 des Nietdorns 9 und dem Blindniet führt. Auch hier wird die Ausbildung des beim Schweißen entstehenden Lichtbogens begünstigt. Darüberhinaus ist die Stirnseite des Setzendes 4 mit einer längs des Umfangs umlaufenden Kante 14 versehen. Ein solcher Blindniet kann bei entsprechendem Antrieb in ein Blech eingeschossen werden, wobei sich die vorstehende Kante 14 ein Loch stanzt.

Die Form des Bodens der verschiedenen Ausführungsformen kann beliebig mit der Form des Setzendes 4 bei den verschiedenen Ausführungsformen miteinander kombiniert werden.

Während bei den Ausführungsformen nach den Figuren 1 bis 3 der Nietkörper 2 einstückig ausgebildet ist, zeigt Figur 4 und Figur 5 eine eine nicht erfindungsgemäße Spitze aufweisende Ausführungsform, bei der das Einsetzende 4 als getrenntes Bauteil 15 ausgebildet ist, das mit einem Schaft 16 in den als Hülse ausgebildeten Nietkörper 2' eingreift. Dadurch wird an dem Ende des Schafts 16 eine Angriffsstelle 17 gebildet, an der dann in der gleichen Weise wie bei den Ausführungsformen nach Figur 1 bis 3 ein Nietdorn angreifen kann. Diese Angriffsstelle 17 ist weiter in die Nähe der Anlagefläche 5 des Flanschs 3 gerückt, was aber nicht stört, da die eigentliche zum Aufspreizen des Blindniets dienende Kraft von einer Schulter 18 des getrennten Bauteils 15 auf den Nietkörper 2' ausgeübt wird.

Figur 5 zeigt den Zustand, wo ein Nietdorn 19 mit seinem vorderen Ende mit der Angriffsstelle 17 des Schafts 16 des Bauteils 15 verbunden ist.

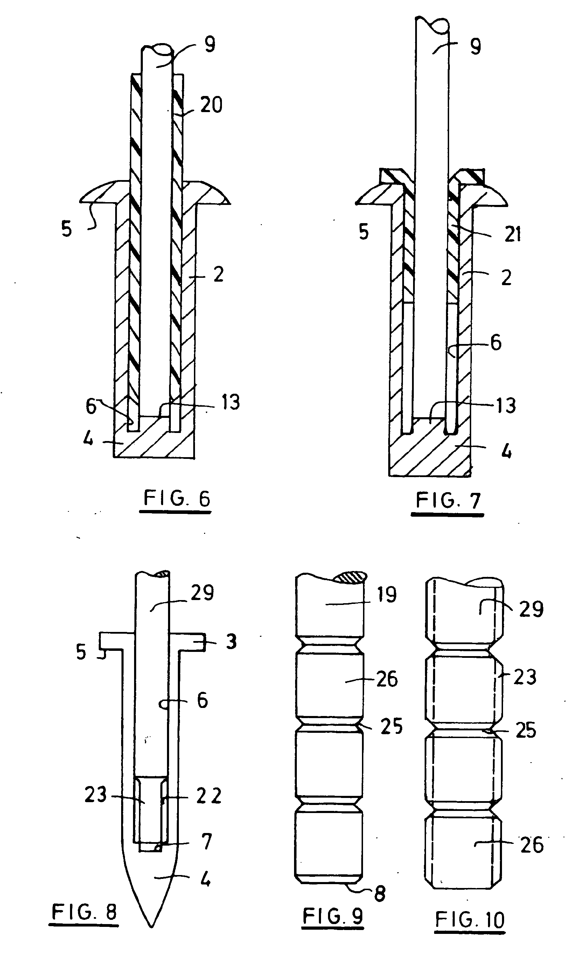

Figur 6 zeigt eine Ausführungsform, die etwas genauer ausgeführt ist als die bisherigen Ausführungsformen. Auf dem Boden des Sacklochs 6 des Nietkörpers 2 ist ein Vorsprung 13 gebildet, ähnlich wie bei der Ausführungsform nach Figur 3. Der Nietdorn 9, der mit der Angriffsstelle des Vorsprungs 13 verbunden wird, weist in seinem vorderen Bereich, der in den Blindniet hineinreicht, eine Isolierhülse 20 oder eine Isolierschicht auf. Dadurch wird sichergestellt, dass bei einem Verschweißen der Strom nur zwischen der Stirnfläche des Nietdorns 9 und der Angriffsstelle des Vorsprungs 13 fließt. Die Isolierhülse 20 isoliert den Nietdorn 9 von dem restlichen Teil des Nietkörpers 2, nämlich von dessen Innenwänden. Hier ist die Isolierhülse 20 Teil des Nietdorns 9.

Figur 7 zeigt eine Ausführungsform, bei der in dem als Hülse ausgebildeten Nietkörper eine Isolierhülse 21 eingesetzt ist, die jetzt dem Blindniet zugeordnet ist. Auf diese Weise kann ein unisolierter Nietdorn 9 verwendet werden, um mit dem Vorsprung 13 verschweißt zu werden. Die Isolierhülse 21 ragt nur zum Teil in den Blindniet hinein, was ausreicht, um den Nietdorn 9 zu zentrieren und dadurch mit Abstand von den Innenwänden des Sacklochs 6 des Nietkörpers 2 zu halten.

Bei den bisher beschriebenen Ausführungsformen wird davon ausgegangen, dass der Nietdorn, 9 als Zugelement mit dem Blindniet verschweißt wird. Figur 8 zeigt schematisch einen Blindniet mit einer nicht erfindungsgemäßen Spitze, der im Bereich des Bodens 7 des Setzendes 4 ein Innengewinde 22 aufweist. In dieses innengewinde ist das vordere mit einem Außengewinde 23 versehene Ende des Nietdorns 29 verschraubt. Der Nietdorn 29 kann in diesem Fall einen Außendurchmesser aufweisen, der nur geringfügig kleiner ist als der Innendurchmesser des Sacklochs 6 des Blindniets. Der Nietdorn 29 kann in diesem Fall von dem Sackloch 6 während des Einschraubens in das Gewinde 22 geführt werden.

Es ist auch möglich, dass anstelle eines ausgeformten Innengewindes 22 hier nur ein im Durchmesser verringerter Teil des Sacklochs vorhanden ist, in dem sich das Außengewinde 23 des Nietdorns 29 ein Gewinde beim Eindrehen schneidet bzw. formt.

Figur 9 zeigt die Seitenansicht eines Nietdorns 19, wie er beispielsweise bei der Ausführungsform des Blindniets nach Figur 7 verwendet werden kann. Der Nietdorn ist durch rings umlaufende Kerben 25 in einzelne Segmente 26 unterteilt. Wenn der Nietdorn 19 mit seiner vorderen Stirnseite 8 mit einem Vorsprung 13 auf dem Boden des Sacklochs 6 verschweißt ist, wird zur Verformung und damit zum Befestigen des Blindniets wie bisher auch gezogen. Die durch die Kerben 25 gebildeten Sollbruchstellen müssen den dabei auftretenden Zugkräften widerstehen. Sobald der Blindniet vollständig befestigt ist, erfolgt dann eine Abtrennung des Nietdorns 19 an der nächstfolgenden Sollbruchstelle, die durch eine Kerbe 25 gebildet ist. Es bleibt damit ein Segment 26 des Nietdorns 19 in dem Blindniet enthalten. Dieser Abschnitt kann eine Verstärkung der Nietverbindung bilden.

Die Ausführungsform mit den durch umlaufende Kerben 25 gebildeten Sollbruchstellen zur Aufteilung des Nietdorns in einzelne Segmente 26 kann nicht nur bei einem an seiner Außenfläche glatten Nietdorn 19 in Figur 9 erfolgen, sondern auch bei einem Nietdorn 29, siehe Figur 10, der an seiner Außenseite ein Außengewinde 23 aufweist. Im dargestellten Beispiel sind die Kerben 25 so tief, dass das Gewinde an dieser Stelle vollständig unterbrochen ist.

Es ist aber auch möglich, dass die Kerben weniger tief sind und das Gewinde nicht vollständig unterbrochen ist. Ebenfalls möglich ist es, dass die Kerben nicht umlaufend ausgebildet sind, sondern sich nur über einen Teil des Umfangs erstrecken oder unterbrochen sind.

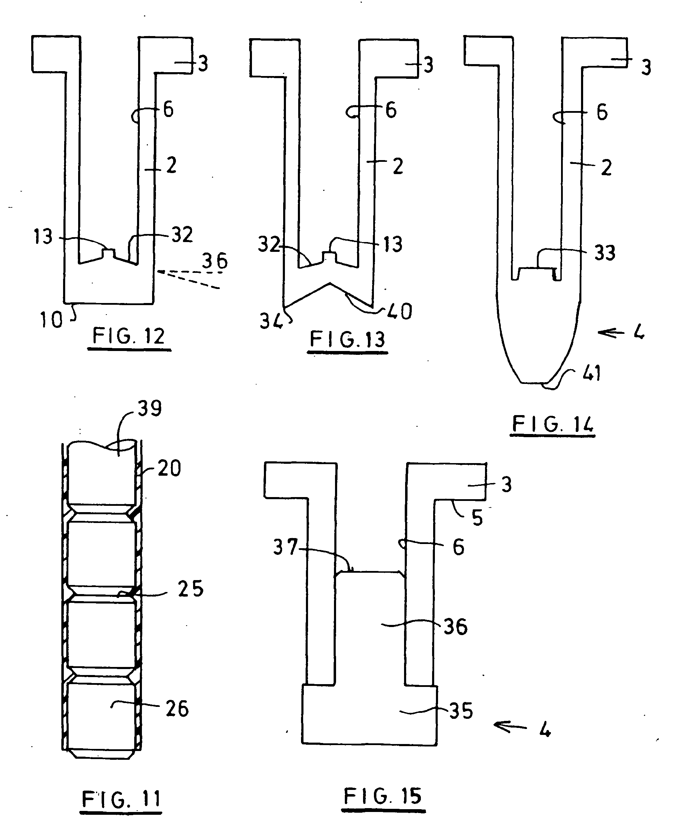

Figur 11 zeigt eine weitere Ausführungsform eines Nietdorns, der dem Nietdorn 19 der Figur 9 ähnlich ist, der aber über seine gesamte Länge eine Isolierhülse 20 aufweist. Bei dieser Isolierhülse kann es sich um eine Kunststoffhülse handeln, die beim Abreißen oder Abscheren des jeweils vordersten Segments 26 mit zerreißt.

Figur 12 zeigt vereinfacht einen Schnitt durch den Nietkörper 2 eines Blindniets ähnlich wie bei der Ausführungsform nach Figur 3. Auf dem Boden 32 der Vertiefung 6 des Nietkörpers 2 ist ein zylindrischer Vorsprung 13 ausgebildet, der die Anlagefläche für den Nietdorn 9, 29, 19 bildet. Außerhalb des Vorsprungs 13 verläuft der Boden 32 der Vertiefung 6 in Richtung von der Innenwand der Vertiefung auf den Vorsprung 13 leicht ansteigend, wobei der Winkel 36 zwischen dem Boden 32 und einer quer verlaufenden Fläche im Bereich von weniger als 45° liegt.

Die Vorderseite des Nietkörpers 2 ist in der gleichen Weise ausgebildet wie die Stirnfläche 10 bei der Ausführungsform nach Figur 2. Ein solcher Nietkörper ist sowohl zum Einsetzen in ein bereits vorhandenes Loch als auch zum Einschießen geeignet.

Figur 13 zeigt eine weitere Ausführungsform, bei der der Nietkörper 2 im Bereich seines Setzendes 4 eine Kante 34 bildet, während die Stirnfläche 40 gegenüber der Ebene, in der die Kante 34 liegt, zurückgesetzt ausgebildet ist.

Während die Ausführungsformen der Figuren 1, 4, 5 und 8 eine nicht erfindungsgemäße tatsächliche Spitze aufweisen, zeigt jetzt die Figur 14 eine erfindungsgemäße Ausführungsform, bei der das Setzende 4 einen Bereich aufweist, in dem sich der Durchmesser längs eines geschwungen verlaufenden Profils verringert, wobei keine Spitze gebildet ist, sondern das vordere Ende eine abgeplattete Stirnfläche 41 bildet.

Figur 15 zeigt eine Ausführungsform ähnlich den Ausführungsformen der Figur 4 und 5 in der Hinsicht, dass das Setzende 4 dieses Nietkörpers 2 von einem getrennten Bauteil 35 gebildet wird. Dieses getrennte Bauteil 35 weist einen einstückigen Ansatz 36 auf, der innerhalb des Nietkörpers 2 von diesem festgehalten wird. Sein inneres Ende 37 bildet die Anlagefläche für den Nietdorn. Auch hier könnte, ähnlich wie bei den Ausführungsformen der Figuren 3, 12, 13 ein Vorsprung vorhanden sein, der als Anlagefläche für den Nietdorn dient.

Die unterschiedlichen Formen des Bodens 7, 12 bzw. 32 der Vertiefungen 6 des Nietkörpers 2 können beliebig miteinander kombiniert werden, je nach dem gewünschten Anwendungsfall.

Bei der Ausführungsform nach Figur 15, wo das Setzende ähnlich wie bei der Ausführungsform nach Figur 2 und 12 auch zum Einschießen geeignet ist, kann vorgesehen sein, dass der Außendurchmesser des das Setzende 4 bildenden Bauteils 35 etwas größer ist als der Außendurchmesser des Nietkörpers 2.

Blindniete der dargestellten und beschriebenen Art dienen nicht nur zur Befestigung zweier Elemente in der Weise, dass auf der gegenüberliegenden Blindseite ein Nietkopf gebildet wird. Sie können auch dazu dienen, ein Element in einem Sackloch zu verriegeln, wo die Zugbewegung des Nietdorns zu einer Aufweitung und Verklemmung an den Seitenwänden des Sacklochs führt, ohne dass hier eine Nietkopfbildung erforderlich ist. Es ist natürlich auch denkbar, dass in einem solchen Sackloch eine derartige Erweiterung des vorderen Endes des Nietkörpers auftritt, dass damit ein Nietkopf innerhalb eines Sacklochs gebildet wird.

## Patentansprüche

1. Verwendung eines Blindniets, der
1.1 einen im wesentlichen zylindrischen Nietkörper (2),
1.2 einen gegenüber dem Nietkörper (2) radial vorspringenden eine quer zur Achse des Nietkörpers (2) verlaufende Anlagefläche (5) bildenden Flansch (3),
1.3 ein mit Abstand von der Anlagefläche (5) des Flanschs (3) angeordnetes vorderes Setzende (4) und
1.4 eine Angriffsstelle für ein keinen Teil des Blindniets bildendes Zugelement zum Aufweiten des vorderen Setzendes (4) des Nietkörpers (2) aufweist, wobei
1.5 das vordere Setzende (4) stumpf, insbesondere abgeplattet (41) ausgebildet ist, **dadurch gekennzeichnet, daß** der Blindniet als Schussniet zum Einschießen in ungelochtes Material verwendet wird.

2. Verwendung eines Blindniets nach Anspruch 1, wobei das vordere Setzende (4) des Blindniets einen sich verringernden Duchmesser aufweist.

3. Verwendung eines Blindniets nach Anspruch 1 oder 2, wobei die Angriffsstelle für das Zugelement eine quer zur Längsachse des Nietkörpers (2) verlaufende Kontaktfläche (7; 13) aufweist, die in einer Vertiefung (6) des Nietkörpers (2) des Blindniets angeordnet ist, insbesondere innerhalb des als Hülse ausgebildeten Nietkörpers (2).

4. Verwendung eines Blindniets nach Anpruch 3, wobei die Kontaktfläche (7; 13) kleiner ist als die Fläche des Bodens (12; 32) der Vertiefung (6) des Nietkörpers (2) und insbesondere auf einem Vorsprung (13; 33) des Bodens (12; 32) der Vertiefung (6) des Nietkörpers (2) angeordnet ist.

5. Verwendung eines Blindniets nach Anspruch 4, wobei der Boden (12) der Vertiefung (6) des Nietkörpers (2) außerhalb des Vorsprungs (13; 33) eben verläuft oder in Richtung auf den Vorsprung (13; 33) ansteigend ausgebildet ist.

6. Verwendung eines Blindniets nach einem der vorhergehenden Ansprüche, wobei das vordere Setzende (4) des Blindniets ein einstückiger Teil des Nietkörpers (2) oder ein mit dem Nietkörper (2) verbundenes getrenntes Teil ist.

7. Verwendung eines Blindniets nach Anspruch 2, wobei das vordere Setzende (4) des Blindniets einen Bereich mit einem geradlinig und /oder geschwungen verlaufenden Profil aufweist.

8. Verwendung eines Blindniets nach einem der vorhergehenden Ansprüche, wobei der Nietkörper (2) als Hülse ausgebildet ist und an seiner dem Nietdorn (9) zugewandten Innenseite eine Isolierschicht oder Isolierhülse (21) aufweist, die ggf aus dem Nietkörper (2) herausragt.

9. Verwendung eines Blindniets nach Anspruch 8, wobei durch die Isolierungen (21) mehrerer Blindniete miteinander zur Bildung eines Magazins verbunden sind.

10. Verwendung eines Blindniets nach einem der vorhergehenden Ansprüche, wobei der Blindniet mit einem Nietdorn als Zugelement ausgestaltet ist.

11. Verfahren zum Setzen eines Blindniets mit einem im wesentlichen zylindrischen Nietkörper (2), einem gegenüber dem Nietkörper (2) radial vorspringenden eine quer zur Achse des Nietkörpers (2) verlaufende Anlagefläche (5) bildenden Flansch (3), einem mit Abstand von der Anlagefläche (5) des Flanschs (3) angeordneten vorderen Setzende (4) mit einer ebenen Stirnfläche und einer Angriffsstelle für ein keinen Teil des Blindniets bildendes Zugelement zum Aufweiten des vorderen Setzendes (4) des Nietkörpers (2), bei dem während des Setzvorgangs das Zugelement mit der Angriffsstelle des Blindniets verbunden **wird, dadurch gekennzeichnet, dass** der Blindniet eingeschossen wird.

## Claims

1. Use of a blind rivet which has
1.1 an essentially cylindrical rivet body (2),
1.2 a flange (3) projecting radially with regard to the rivet body (2) and forming a contact surface (5) running perpendicularly to the axis of the rivet body (2),
1.3 a front setting end (4) arranged at a distance from the contact surface (5) of the flange (3) and
1.4 a point of attack for a tension element, not forming part of the blind rivet, for expanding the front setting end (4) of the rivet body (2), whereby
1.5 the front setting end (4) is blunt, more particularly flattened out (41)
**characterised in that** the blind rivet is used as a shot rivet for shooting into material without holes.

2. Use of a blind rivet in accordance with claim 1, whereby the setting end (4) of the blind rivet has a decreasing diameter.

3. Use of a blind rivet in accordance with claim 1 or 2, whereby the point of attack for the tension element has a contact surface (7; 13) which runs perpendicularly to the longitudinal axis of the rivet body (2) and which is arranged in a recess (6) of the rivet body (2) of the blind rivet, more particularly within the rivet body (2) designed as a housing.

4. Use of a blind rivet in accordance with claim 3 whereby the contact surface (7; 13) is smaller than the surface of the base (12; 32) of the recess (6) of the rivet body (2) and, more particularly, is arranged on a projection (13; 33) of the base (12; 32) of the recess (6) of the rivet body (2).

5. Use of a blind rivet in accordance with claim 4 whereby the base (12) of the recess (6) of the rivet body (2) runs in a level manner outside the projection (13; 33) or ascends in the direction of the projection (13; 33).

6. Use of a bind rivet in accordance with any one of the preceding claims whereby the front setting end (4) of the bind rivet is a component formed in one piece with the rivet body (2) or is a separate component connected to the rivet body (2).

7. Use of a bind rivet in accordance with claim 2 whereby the front setting end (4) of the blind rivet has an area with a straight-lined or curved profile.

8. Use of a blind rivet in accordance with any one of the preceding claims whereby the rivet body (2) is designed as a sleeve and on its inner side facing the rivet mandrel (9) has a isolating layer or isolating sleeve (21) which may project out of the rivet body (2).

9. Use of a blind rivet in accordance with claim 8 whereby the isolation elements (21) of several blind rivets are connected to each other to form a magazine.

10. Use of a blind rivet in accordance with any one of the preceding claims, whereby the blind rivet is provided with a rivet mandrel as a tension element.

11. Method of setting a blind rivet with an essentially cylindrical rivet body (2), a flange (3) projecting radially with regard to the rivet body (2) and forming a contact surface (5) running perpendicularly to the axis of the rivet body (2), a front setting end (4) arranged at a distance from the contact surface (5) of the flange (3) with a flat end face and a point of attack for a tension element, not forming part of the blind rivet, expanding the front setting end (4) of the rivet body (2) in which during the setting process the tension element is connected to the point of attack of the blind rivet, **characterised in that** the blind rivet is shot in.

## Revendications

1. Emploi d'un rivet aveugle qui présente
1.1 un corps de rivet (2) essentiellement cylindrique,
1.2 une bride (3) en saillie radiale par rapport au corps de rivet (2), formant une surface d'appui (5) transversale à l'axe du corps de rivet (2),
1.3 une extrémité de pose avant (4) disposée à distance de la surface d'appui (5) de la bride (3),
1.4 un point de débordement pour un élément de traction ne faisant pas partie du rivet aveugle pour élargir l'extrémité de pose avant (4) du corps de rivet (2), dans lequel
1.5 l'extrémité de pose avant (4) est formée en étant tronquée, en particulier aplatie (41),
**caractérisé en ce que** le rivet aveugle est employé en tant que rivet pour pistolet à poser au pistolet dans un matériau non percé.

2. Emploi d'un rivet aveugle selon la revendication 1, dans lequel l'extrémité de pose avant (4) présente un diamètre qui se réduit.

3. Emploi d'un rivet aveugle selon la revendication 1 ou 2, dans lequel le point de débordement pour l'élément de traction présente une surface de contact (7 ; 13) transversale à l'axe longitudinal du corps de rivet (2), laquelle est disposée dans un évidement (6) du corps de rivet (2) du rivet aveugle, en particulier à l'intérieur du corps de rivet (2) formé en tant que manchon.

4. Emploi d'un rivet aveugle selon la revendication 3, dans lequel la surface de contact (7 ; 13) est plus petite que la surface du fond (12 ; 32) de l'évidement (6) du corps de rivet (2) et en particulier, est disposée sur une saillie (13 ; 33) du fond (12 ; 32) de l'évidement (6) du corps de rivet (2).

5. Emploi d'un rivet aveugle selon la revendication 4, dans lequel le fond (12) de l'évidement (6) du corps de rivet (2) est plat en-dehors de la saillie (13 ; 33) ou est formé montant en direction de la saillie (13 ; 33).

6. Emploi d'un rivet aveugle selon l'une des revendications précédentes, dans lequel l'extrémité de pose avant (4) du rivet aveugle est une pièce d'un seul tenant du corps de rivet (2) ou une pièce séparée reliée au corps de rivet (2).

7. Emploi d'un rivet aveugle selon la revendication 2, dans lequel l'extrémité de pose avant (4) du rivet aveugle présente une zone au profil en ligne droite et/ou arqué.

8. Emploi d'un rivet aveugle selon l'une des revendications précédentes, dans lequel le corps de rivet (2) est formé en tant que manchon et sa face intérieure tournée vers le boulon riveté (9) présente une couche isolante ou un manchon isolant (21) qui fait saillie du corps de rivet (2) le cas échéant.

9. Emploi d'un rivet aveugle selon la revendication 8, dans lequel plusieurs rivets aveugles sont reliés ensemble par des isolations (21) pour former un magasin.

10. Emploi d'un rivet aveugle selon l'une des revendications précédentes, dans lequel le rivet aveugle est doté d'un boulon riveté en tant qu'élément de traction.

11. Procédé de pose d'un rivet aveugle comprenant un corps de rivet (2) essentiellement cylindrique, une bride (3) en saillie radiale formant une surface d'appui (5) transversale à l'axe du corps de rivet (2), une extrémité de pose avant (4) disposée à distance de la surface d'appui (5) de la bride (3) avec une surface frontale plane et un point de débordement pour un élément de traction ne faisant pas partie du rivet aveugle pour élargir l'extrémité de pose avant (4) du corps de rivet (2), dans lequel pendant la pose, l'élément de traction est relié au point de débordement du rivet aveugle, **caractérisé en ce que** le rivet aveugle est posé au pistolet.
